# EUROPEAN PATENT SPECIFICATION

(11) **EP 4 477 380 B1**
(45) Date of publication and mention of the grant of the patent: **08.10.2025**
(21) Application number: 24180722.1
(22) Date of filing: 07.06.2024
(51) Int. Cl.: B29C 48/00, E04C 5/20, B29K 27/06, B29L 31/00, B29C 48/07, B29C 48/11, B29C 48/12, B29C 48/88

(54) **METHOD FOR MANUFACTURING EXTRUDED SPACERS**
VERFAHREN ZUR HERSTELLUNG VON EXTRUDIERTEN ABSTANDSHALTERN
PROCÉDÉ DE FABRICATION D'ESPACEURS EXTRUDÉS

(30) Priority: 14.06.2023 IT 202300012162
(43) Date of publication of application: 18.12.2024
(73) Proprietor: Faserbeton S.r.l., 31020 Tarzo (TV) (IT)
(72) Inventor: MASINI, Roberto, 31020 Tarzo (TV) (IT)
(74) Representative: Ripamonti, Enrico

(56) References cited:
- EP-A1- 2 716 833
- EP-A1- 3 002 380
- EP-A1- 3 795 769

## Description

The present invention relates to a method for manufacturing an extruded spacer.

More in particular, the present invention relates to a method for manufacturing a spacer with an extruded profile made of PVC (Polyvinylchloride) for use in the construction field and in buildings in general, and more specifically in reinforced concrete structures.

As is known, in the building construction field, and more specifically with reference to building walls or slabs or floors made of reinforced concrete, and similar industrial implementations, extruded spacers are used for creating the correct concrete cover, i.e., the distance between the outer surface of the reinforcement (including brackets, connections, and surface reinforcements, if provided) closest to the surface of the concrete and the surface itself of the cement conglomerate.

Such extruded spacers are functional to keep said reinforcement (defined by an electro-welded mesh or shaped steel rods) raised with respect to the ground or the bottom of a formwork or the like for the correct anchorage of the concrete and thus for the correct forming of the cement cast to be obtained.

Extruded PVC spacers are used as an alternative to fiber-cement or poured concrete spacers due to being cheaper.

The extruded PVC spacer extends longitudinally with a C-shaped section outline and is typically drilled on three sides.

Typically, the extruded PVC spacer is made by a method comprising the steps of extruding the C-shaped section profile, calibrating, cooling the extruded profile in water at a temperature between 10°C and 15°C, drilling on three sides of the extruded profile, and cutting it at 2 meter intervals, see for example EP 3 795 769 A1.

However, the traditional method for manufacturing extruded PVC spacers has some significant drawbacks.

A drawback of the traditional method is that, with reference to the drawing step, the incoming raw material to be drawn must be selected with care and moreover it is only possible to extrude one profile or two at the most, but with separate dies, calibrators, pullers, and cutters, all this resulting in increased costs and times.

A further drawback of the traditional method is linked to the calibration step; in fact, it is important to extrude the profile in tolerance since, otherwise, the soft profile (coming from the drawing step) would not pass into the caliper and thus the process would be interrupted causing machine downtime, intervention work for restoration, with a consequent increase in times and related costs.

A further drawback of the traditional method is linked to the fact that the cooling step implies considerable energy consumption since in order to crystallize the section of the extruded profile in the calibrated section, it is necessary to use water cooled by coolers or chillers.

A further drawback is linked to the step of drilling the extruded profile, which requires expensive equipment provided with very small punches and dies; this results in a related drawback linked to the fact that, if the profile is out of tolerance, the method stops.

It is the object of the present invention to obviate the drawbacks disclosed above.

More in particular, it is an object of the present invention to provide a method for manufacturing an extruded spacer made of PVC (Polyvinylchloride) for use in the building field, adapted to achieve an improvement of productivity as compared to traditional methods with equivalent consumptions.

It is a further object of the present invention to provide a method for manufacturing an extruded spacer adapted to allow utilizing small spaces in relation to the number of pieces to be produced.

It is a further object of the present invention to provide a method for manufacturing an extruded spacer adapted to allow a reduction in energy consumption per extruded kilogram.

It is a further object of the present invention to provide a method for manufacturing extruded spacers adapted to optimize the dimensional tolerances of the spacers themselves.

It is a further object of the present invention to provide a method for manufacturing spacers, which is both stable and not particularly subject to machine downtimes.

It is a further object of the present invention to provide a method for manufacturing spacers adapted to allow forming extruded spacers with reduced thickness.

It is a further object of the present invention to provide users with a method for manufacturing extruded PVC spacers adapted to ensure high reliability and also such as to be implemented cheaply and easily.

These and other objects are achieved by the invention having the features outlined in claim 1.

According to the invention, there is provided a method for manufacturing an extruded spacer made of PVC (Polyvinylchloride) for use in the building field, comprising a sequence of steps defined by extrusion of a flat profile with constant thickness, calibration of said profile, partial cooling in non-refrigerated water, lateral trimming, flat drilling of said flat profile, cutting to size of the extruded flat profile, forming or shaping of the profiles, heat treatment, further drilling of the profile, cutting of the profile itself.

Advantageous embodiments of the invention become apparent from the dependent claims.

The constructional and functional features of the method for manufacturing extruded spacers according to the present invention can be better understood from the following detailed description in which reference will be made to the accompanying drawings which illustrate a preferred and non-limiting embodiment thereof, and in which:
figure 1 diagrammatically shows an axonometric view of a piece of extruded spacer made according to the method of the invention;
figure 2 diagrammatically shows a plan view of a piece of extruded spacer made according to the method of the invention in an operating step of the forming method;
figure 3 diagrammatically shows an axonometric view of an exemplary system for manufacturing an extruded spacer according to the method of the invention.

The method for manufacturing an extruded spacer of the invention comprises, as better described below, a sequence of steps defined by extrusion of a flat profile, calibration of the profile, partial cooling in non-refrigerated water, lateral trimming, flat drilling, cutting to size of the extruded flat profile, forming or shaping of the profiles, heat treatment consisting of mild heating with forced hot air, further drilling of the profile, cutting of the profile itself.

The extrusion step, which is carried out in an extrusion station 12 of a system 10, is carried out using cheaper raw material than the traditional one (the raw material used in this step for forming the extruded flat profile can be "impure" with respect to that commonly used since the output section of the die has larger thicknesses than those of the profile itself) and defines a flat profile with a first constant thickness which, subsequently and by means of a pulling action, is reduced until reaching the desired thickness for a specific function defined by production (it is possible, for example, to form four profiles at a time with 40/50% reduced energy consumptions as compared to traditional methods).

Once the extrusion step has finished, the cooling step is carried out, during which the extruded flat profile is brought from a temperature of 170°C to a temperature of 100°C by passing through water at a temperature between 70°C and 80°C (temperature reached with the transfer of heat from the extruded flat profile); such a step takes place in a cooling tank 14.

The calibration step then begins (in a calibration pulling device 16), during which the extruded flat profile is subjected to a pulling action as a function of the dimensional characteristics of the predefined final profile, without passing through a so-called calibration device (in fact, the calibration of the thickness is carried out by "more or less" pulling the flat profile), with the thickness of the section of the flat profile being brought to the desired dimension.

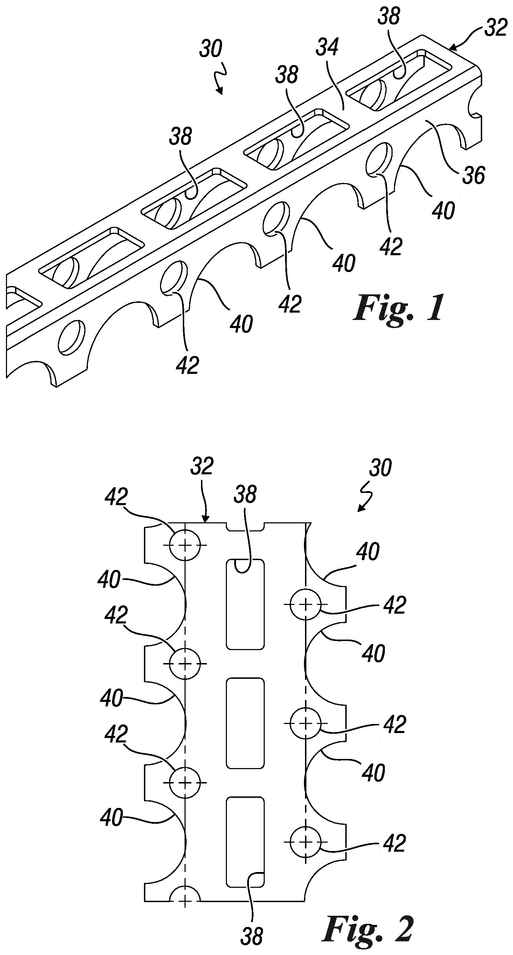

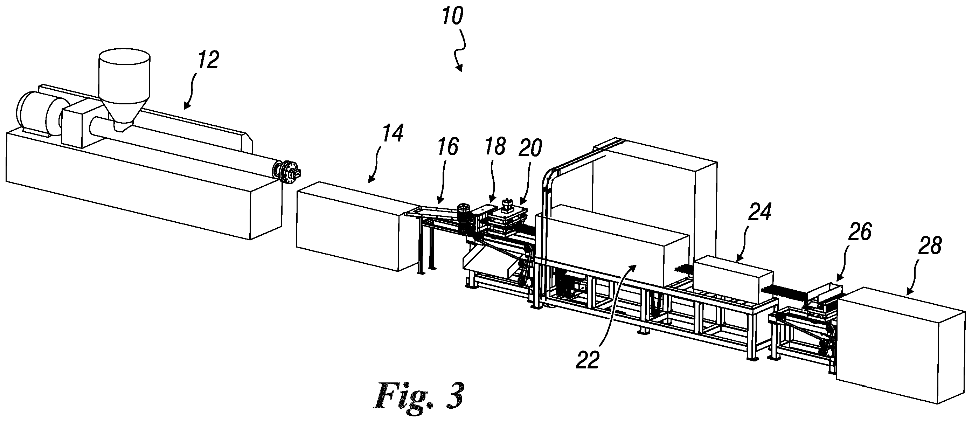

The cooled and calibrated extruded flat profile is subjected to a subsequent lateral trimming step (indicated by 19 in figure 3) and to a first drilling step (indicated by 20 in figure 3) during which a blanking die makes the holes on the extruded flat profile as described below (as shown in figure 2); at every stroke of the blanking die, four extruded flat profiles can be drilled.

The number of profiles obtainable with a single extrusion is a function of the type of extruded profile to be obtained (width of the extruded plate, and production capacity of the extruder); considering, for example, the typical heights of the profiles which vary from 15 mm to 75 mm, in the case of profiles with heights between 15 mm and 30 mm it is possible to obtain four profiles with a single extrusion, whereas for greater heights the number of obtainable profiles is less than four.

The blanking die mentioned in the aforesaid cutting step is of the flat type on runners.

The extruded flat profile thus cut is then subjected to cutting to measure to form bands (indicated by station 22 in figure 3).

By way of example, considering an extruded profile defining a concrete cover of 30 mm, an extruded slab with a width of 400 mm is first used, which is then trimmed and brought to 360 mm before being cut into four bands of 90 mm each.

In the same station 22, a forming process is then carried out during which roll forming means shape the profile according to the desired shape as better described below; such a forming is carried out by means of a roll system which allows forming very precisely sized profiles.

The formed profiles are then subjected to a heat treatment step (in the treatment station 24), a drilling step on the shaped profiles (in station 26), and finally a cutting-to-measure process (in station 28) to define extruded profiles with a length generally equal to 2 meters.

Figures 1 and 2 show the extruded PVC spacer 30 made according to the method previously described and according to a possible embodiment.

More in particular, said extruded spacer 30 comprises an extruded profile 32 longitudinally extending and bent (in the shaping step previously described) to define a C-section shape comprising a face or base 34 from the opposing longitudinal edges of which two opposing and parallel side faces or shoulders 36 extend, arranged perpendicularly with respect to said face or base 34.

According to the embodiment exemplified in figures 1 and 2, the face or base 34 comprises through openings 38 and the opposing and parallel lateral faces or shoulders 36 also comprise first openings 40 and second openings 42 of the through type; the shape and size of such openings can vary as a function of aesthetic characteristics (with reference to the preferred and non-limiting embodiment shown in figure 1, the through openings 38 are quadrangular in shape, the first openings 40 are semicircular in shape, and the second openings 42 are circular in shape).

The through openings 38 are aligned along a median axis of the longitudinal extension of the profile and are equally spaced apart from one another.

The first openings 40 are formed starting from a longitudinal edge of the opposing and parallel lateral faces or shoulders 36 on the opposite side with respect to the edge of the face or base 34 and are equally spaced apart from one another.

The second openings 42 are formed on the opposing and parallel lateral faces or shoulders 36 in an intermediate position between two first openings 40 and are equally spaced apart from one another.

The advantages achieved by the method for manufacturing an extruded spacer made of PVC of the invention are apparent from the disclosure above.

The method for manufacturing an extruded spacer made of PVC for building use of the invention advantageously allows increasing the productivity of the production line with equivalent consumptions (the productivity is substantially triplicated with respect to the productivity of traditional and known methods).

A further advantage of the method of the invention is linked to the fact that it allows about a 50% reduction in energy costs per kilogram of extruded product.

Also advantageous is the fact that the method of the invention creates an improvement of the dimensional tolerances of the final product.

It is a further advantage that the method of the invention allows using cheaper materials (also recycled materials) than traditional methods and this results in a reduction in the related costs.

It is a further advantage of the method of the present invention the fact that it has a reduced if not eliminated number of machine downtimes and thus ensures a strongly stable method.

It is a further advantage of the present invention that the method for manufacturing extruded spacers made of PVC allows utilizing small production spaces as compared to traditional ones and further allows reducing the cost of equipment in relation to the production capacity of the line.

Also advantageous is the fact that the method of the invention allows the production of extruded profiles characterized by reduced thickness.

Although the invention has been described above with particular reference to an embodiment thereof, merely given by way of non-limiting example, several modifications and variations will become apparent to those skilled in the art in light of the above description. Therefore, the present invention aims to encompass all modifications and variations falling within the scope of the following claims.

## Claims

1. A method for manufacturing an extruded spacer made of PVC (Polyvinylchloride) for use in the building field of the reinforced concrete construction type, **characterized in that** it comprises a sequence of steps defined by extrusion of a flat profile with constant thickness, calibration of said profile, partial cooling in non-refrigerated water, lateral trimming, first flat drilling of said flat profile, cutting to size of the extruded flat profile, forming or shaping of the profiles, heat treatment, second drilling of the shaped or formed profile, cutting to size of the shaped or formed profile itself.

2. A method according to claim 1, **characterized in that** the calibration step occurs by means of an action of pulling the extruded flat profile as a function of the final profile without passing through a calibration device.

3. A method according to claim 1, **characterized in that** in the cooling step the extruded and calibrated flat profile is brought from a temperature of 170°C to a temperature of 100°C by passing through water at a temperature between 70°C and 80°C.

4. A method according to claim 1, **characterized in that** the first drilling step creates holes on the extruded flat profile, said drilling being carried out by means of a flat blanking die.

5. A method according to claim 4, **characterized in that** the first drilling step creates holes on extruded flat profiles at every abutment of the blanking die.

6. A method according to claim 1, **characterized in that** the forming step is carried out by roll forming means adapted to give the extruded flat profile a "C" shape.

7. A method according to claim 1, **characterized in that** the cutting-to-measure step comprises cutting the profiles formed with a length generally equal to 2 meters.

8. An extruded spacer (30) made of PVC manufactured by the method according to the preceding claims and **characterized in that** it comprises an extruded profile (32) longitudinally extended and bent to define a C-section shape comprising a face or base (34) from the opposing longitudinal edges of which two opposing and parallel side faces or shoulders (36) extend, arranged perpendicularly with respect to said face or base (34), the face or base (34) and the opposing and parallel side faces or shoulders (36) comprising through openings.

9. An extruded spacer (30) according to claim 8, **characterized in that** the face or base (34) comprises through openings (38) aligned along a median axis of the longitudinal extension of the profile and equally spaced apart from each other, the opposing and parallel lateral faces or shoulders (36) each comprise first openings (40) formed from a longitudinal edge on the opposite side with respect to the edge of the face or base (34) and equally spaced apart from each other and second openings (42) formed in between two first openings (40) and equally spaced apart from each other.

## Patentansprüche

1. Verfahren zur Herstellung eines extrudierten Abstandhalters aus PVC (Polyvinylchlorid) zur Verwendung im Bauwesen für Stahlbetonkonstruktionen, **dadurch gekennzeichnet, dass** dieses eine Abfolge von Schritten umfasst, die durch Extrudieren eines flachen Profils mit konstanter Dicke, Kalibrieren des Profils, teilweises Abkühlen in nicht gekühltem Wasser, seitliches Besäumen, erstes Flachbohren des flachen Profils, Zuschneiden des extrudierten flachen Profils, Formen oder Gestalten der Profile, Wärmebehandlung, zweites Bohren des geformten oder gestalteten Profils, Zuschneiden des geformten oder gestalteten Profils selbst.

2. Verfahren nach Anspruch 1, **dadurch gekennzeichnet, dass** der Kalibrierungsschritt durch Ziehen des extrudierten Flachprofils in Abhängigkeit vom Endprofil, ohne dass dieses eine Kalibriervorrichtung durchläuft.

3. Verfahren nach Anspruch 1, **dadurch gekennzeichnet, dass** in dem Kühlschritt das extrudierte und kalibrierte Flachprofil von einer Temperatur von 170 °C auf eine Temperatur von 100 °C gebracht wird, indem es durch Wasser mit einer Temperatur zwischen 70 °C und 80 °C geführt wird.

4. Verfahren nach Anspruch 1, **dadurch gekennzeichnet, dass** im ersten Bohrschritt Löcher in das extrudierte Flachprofil eingebracht werden, wobei das Bohren mittels einer flachen Stanzwerkzeug durchgeführt wird.

5. Verfahren nach Anspruch 4, **dadurch gekennzeichnet, dass** der erste Bohrschritt Löcher in extrudierten Flachprofilen an jedem Anschlag der Stanzmatrize erzeugt.

6. Verfahren nach Anspruch 1, **dadurch gekennzeichnet, dass** der Formungsschritt durch eine Rollformvorrichtung durchgeführt wird, die so ausgelegt ist, dass sie dem extrudierten Flachprofil eine "C"-Form verleiht.

7. Verfahren nach Anspruch 1, **dadurch gekennzeichnet, dass** der Schritt des Zuschneidens auf Maß das Schneiden der geformten Profile auf eine Länge von im Allgemeinen 2 Metern umfasst.

8. Ein extrudierter Abstandhalter (30) aus PVC, hergestellt nach dem Verfahren gemäß den vorstehenden Ansprüchen hergestellt ist und **dadurch gekennzeichnet ist, dass** er ein extrudiertes Profil (32) umfasst, das in Längsrichtung verlängert und gebogen ist, um eine C-förmige Querschnittsform zu definieren, die eine Fläche oder Basis (34) sich zwei gegenüberliegende und parallele Seitenflächen oder Schultern (36) erstrecken, die senkrecht zu der Fläche oder Basis (34) angeordnet sind, wobei die Fläche oder Basis (34) und die gegenüberliegenden und parallelen Seitenflächen oder Schultern (36) Durchgangsöffnungen aufweisen.

9. Extrudierter Abstandhalter (30) nach Anspruch 8, **dadurch gekennzeichnet, dass** die Stirn- oder Grundfläche (34) Durchgangsöffnungen (38) aufweist, die entlang einer Mittelachse der Längserstreckung des Profils ausgerichtet und gleichmäßig voneinander beabstandet sind, wobei die gegenüberliegenden und parallelen Seitenflächen oder Schultern (36) jeweils erste Öffnungen (40) aufweisen, die von einer Längskante auf der gegenüberliegenden Seite in Bezug auf die Kante der Fläche oder Basis (34) gebildet werden und in gleichen Abständen voneinander angeordnet sind, sowie zweite Öffnungen (42) aufweisen, die zwischen zwei ersten Öffnungen (40) gebildet werden und in gleichen Abständen voneinander angeordnet sind.

## Revendications

1. Procédé de fabrication d'une entretoise extrudée en PVC (polychlorure de vinyle) destinée à être utilisée dans le domaine de la construction de bâtiments en béton armé, **caractérisé en ce qu'**elle comprend une séquence d'étapes définies par l'extrusion d'un profilé plat d'épaisseur constante, calibrage dudit profilé, refroidissement partiel dans de l'eau non réfrigérée, rognage latéral, premier perçage à plat dudit profilé plat, découpe à la taille du profilé plat extrudé, formage ou façonnage des profilés, traitement thermique, deuxième perçage du profilé façonné ou formé, découpe à la taille du profilé façonné ou formé lui-même.

2. Procédé selon la revendication 1, **caractérisé en ce que** l'étape de calibrage s'effectue au moyen d'une action de traction du profil plat extrudé en fonction du profil final sans passer par un dispositif de calibrage.

3. Procédé selon la revendication 1, **caractérisé en ce que**, dans l'étape de refroidissement, le profilé plat extrudé et calibré est amené d'une température de 170 °C à une température de 100 °C en le faisant passer dans de l'eau à une température comprise entre 70 °C et 80 °C.

4. Procédé selon la revendication 1, **caractérisé en ce que** la première étape de perçage crée des trous sur le profilé plat extrudé, ledit perçage étant effectué au moyen d'une matrice de découpage plate.

5. Procédé selon la revendication 4, **caractérisé en ce que** la première étape de perçage crée des trous sur les profilés plats extrudés à chaque butée de la matrice de découpage.

6. Procédé selon la revendication 1, **caractérisé en ce que** l'étape de formage est réalisée à l'aide d'un moyen de formage par roulage adapté pour donner au profilé plat extrudé une forme en « C ».

7. Procédé selon la revendication 1, **caractérisé en ce que** l'étape de découpe sur mesure comprend la découpe des profilés formés à une longueur généralement égale à 2 mètres.

8. Entretoise extrudée (30) en PVC fabriquée selon les revendications précédentes et **caractérisée en ce qu'**elle comprend un profilé extrudé (32) allongé longitudinalement et plié pour définir une forme en section en C comprenant une face ou base (34) à partir des bords longitudinaux opposés de se prolongent deux faces latérales ou épaulements opposés et parallèles (36), disposés perpendiculairement par rapport à ladite face ou base (34), la face ou base (34) et les faces latérales ou épaulements opposés et parallèles (36) comprenant des ouvertures traversantes.

9. Entretoise extrudée (30) selon la revendication 8, **caractérisée en ce que** la face ou base (34) comprend des ouvertures traversantes (38) alignées le long d'un axe médian de l'extension longitudinale du profilé et équidistantes les unes des autres, les faces latérales ou épaulements opposés et parallèles (36) comprennent chacune des premières ouvertures (40) formées à partir d'un bord longitudinal sur le côté opposé par rapport au bord de la face ou de la base (34) et équidistantes les unes des autres, et des secondes ouvertures (42) formées entre deux premières ouvertures (40) et équidistantes les unes des autres.
